# EUROPÄISCHE PATENTSCHRIFT

(11) **EP 1 948 480 B1**
(45) Veröffentlichungstag und Bekanntmachung des Hinweises auf die Patenterteilung: **06.01.2010**
(21) Anmeldenummer: 06818602.2
(22) Anmeldetag: 16.11.2006
(51) Int. Cl.: B60R 16/03

(54) **VERFAHREN ZUM STEUERN DES BORDNETZES EINES KRAFTFAHRZEUGS**
METHOD FOR CONTROLLING A VEHICLE ELECTRIC SYSTEM
PROCEDE POUR COMMANDER LE RESEAU DE BORD D'UN VEHICULE A MOTEUR

(30) Priorität: 18.11.2005 DE 102005055004
(43) Veröffentlichungstag der Anmeldung: 30.07.2008
(73) Patentinhaber: Bayerische Motoren Werke Aktiengesellschaft, 80809 München (DE)
(72) Erfinder: PRZYWECKI, Frank, 85774 Unterföhring (DE)
(86) Internationale Anmeldenummer: PCT/EP2006/011015
(87) Internationale Veröffentlichungsnummer: WO 2007/057193

(56) Entgegenhaltungen:
- EP-A- 1 595 748
- DE-A1- 19 859 036

## Beschreibung

Die Erfindung betrifft ein Verfahren zum Steuern des Bordnetzes eines Kraftfahrzeugs nach dem Oberbegriff von Anspruch 1, der aus dem Dokument DE 198 59 036 bekannt ist.

Die Anzahl der elektrischen Verbraucher nimmt bei Kraftfahrzeugen immer mehr zu. So sind heute bereits standardmäßig elektrische Verbraucher wie Anlasser, Scheinwerfer und Innenraumbeleuchtung, Radio und Mobilfunkgeräte, Fensterheber und Klimaanlage, Außenspiegelverstellung und Sitzverstellung sowie Zentralverriegelung in einem Fahrzeug eingebaut, und es ist absehbar, dass bei zukünftigen Fahrzeugen weitere elektrische Verbraucher hinzukommen werden. Diese Verbraucher müssen alle elektrisch versorgt werden.

Zur Energieversorgung der elektrischen Verbraucher ist ein Bordnetz in jedem Kraftfahrzeug vorhanden, an dem auf der einen Seite alle elektrischen Verbraucher und auf der anderen Seite in der Regel ein Generator und eine Batterie (ein Akkumulator) als Stromquelle angeschlossen sind. Während der Generator vom Verbrennungsmotor des Fahrzeuges angetrieben wird und elektrische Leistung bei laufendem Verbrennungsmotor zur Verfügung stellt, dient die Bordnetzbatterie als zusätzlicher Energiespeicher, der hauptsächlich beim Startvorgang des Verbrennungsmotors belastet wird, der aber auch als Puffer dient, wenn der Generator allein die benötigte elektrische Leistung nicht bereitzustellen in der Lage ist. Dies ist beispielsweise der Fall bei geringer Generatordrehzahl und einer Vielzahl von eingeschalteten Verbrauchern.

Zur Aufrechterhaltung der Energieversorgung dieser Verbraucher müssen Generator und Bordnetzbatterie entsprechend ausgelegt werden.

Um kurzfristige Anforderungen an die elektrische Versorgung abzufedern, ohne deswegen Generator und Batterie größer auslegen zu müssen, wird in DE 198 59 036 ein zusätzlicher Ladungsspeicher vorgeschlagen. Bei dem Bordnetz für ein Kraftfahrzeug nach DE 198 59 036 ist zu einem Primärsystem, bestehend aus einem Generator, einer Bordnetzbatterie und mindestens einem Verbraucher, ein Sekundärsystem parallel geschaltet, das einen ansteuerbaren DC/DC-Wandler aufweist, der mit einem Superkondensator verbunden ist. Der Superkondensator wird je nach Betriebszustand des Kraftfahrzeuges geladen bzw. entladen. Bei ungünstigen Betriebsbedingungen kann die im Superkondensator gespeicherte Energie dem Bordnetz zur Verfügung gestellt werden. Dadurch wird die Belastung der Bordnetzbatterie verringert.

Ein Nachteil bei diesem Stand der Technik besteht unter anderem darin, dass schwerpunktmäßig die rekuperativ erzeugte Leistung genutzt wird, d.h. diejenige Leistung, die gewonnen wird, wenn das Fahrzeug durch den Generator gebremst wird. Wenn jedoch zu viele Verbraucher am Bordnetz hängen, kann es zu einer Überlastung des Generators kommen.

Aufgabe der vorliegenden Erfindung ist es, ein Verfahren für die Steuerung eines Bordnetzes für ein Kraftfahrzeug anzugeben, mit dem sichergestellt ist, dass der Generator nicht überlastet wird.

Diese Aufgabe wird gelöst durch das Verfahren zum Steuern eines Bordnetzes eines Kraftfahrzeugs nach Anspruch 1. Bevorzugte Ausführungsformen der Erfindung sind Gegenstand der Unteransprüche.

Die erfindungsgemäße Lösung der obigen Aufgabe beruht auf der Erkenntnis des Erfinders, dass es v.a. zu einer Unterversorgung des Bordnetzes kommt, wenn der Generator bei niedrigen Drehzahlen arbeitet. Eine niedrige Drehzahl, insbesondere im Leerlauf, ist häufig z.B. beim Kaltstart im Winter oder beim sogenannten Stopand-Go-Betrieb mit eingeschalteter Klimaanlage im Sommer gegeben. Auf der elektrischen Seite ist der Generator dann zu 100% ausgelastet, da z.B. gerade im Winter Heizgeräte eingeschaltet sind und weitere Verbraucher zugeschaltet werden. Diese können dann bei niedrigen Drehzahlen vom Generator nicht mehr versorgt werden. Die Versorgung übernimmt die Batterie oder einzelne Verbraucher, die u.U. nicht mehr versorgt werden können müssen zwangsweise vom Bordnetz genommen werden, um ein Zusammenbrechen der elektrischen Versorgung zu vermeiden. Bei Erhöhung der Drehzahl, beispielsweise beim Anfahren, bleibt der Generator weiterhin zu 100% ausgelastet, nun kann er aber den gesamten Bedarf an elektrischer Leistung decken, d.h. abgeschaltete Verbraucher können nun nach und nach wieder zugeschaltet werden. Wenn die Drehzahl noch weiter darüber hinaus ansteigt, wird elektrische Leistung erzeugt, die nicht mehr unmittelbar benötigt wird, also als überschüssige Leistung vorhanden ist. Diese überschüssige Leistung kann nun erstens zum Aufladen der Batterie verwendet werden und zweitens für die spätere Verwendung in der Speicherkapazität gespeichert werden. Bei einer folgenden Leerlaufphase wird die Speicherkapazität wieder entladen. Damit wird verhindert, dass die Batterie zyklisch belastet werden muss.

Das erfindungsgemäße Verfahren zum Steuern eines Bordnetzes eines Kraftfahrzeugs mit einem Generator, einer Batterie zum Versorgen des Bordnetzes, wenigstens einem Verbraucher und einer Speicherkapazität zum kurzfristigen Bereitstellen elektrischer Leistung bei Bedarf, wobei die Batterie aufgeladen wird, wenn der Generator überschüssige elektrische Leistung erzeugt, das die Schritte aufweist: Versorgen des wenigstens einen Verbrauchers und Aufladen der Batterie sowie der Speicherkapazität durch den Generator im Lastbetrieb oder bei Schubabschaltung, wobei der wenigstens eine Verbraucher zusätzlich durch die Batterie und/oder die Speicherkapazität versorgt wird, wenn die momentane Generatorleistung nicht ausreicht, ist gekennzeichnet durch die Schritte Erfassen einer momentan benötigten elektrischen Verbraucherleistung im Lastbetrieb oder bei Schubabschaltung, Vergleichen der Verbraucherleistung mit einer Leerlaufleistung des Generators und Aufladen der Speicherkapazität durch den Generator, wenn die Leerlaufleistung des Generators kleiner als die Verbraucherleistung im Lastbetrieb oder bei Schubabschaltung ist.

Bei einer bevorzugten Ausführungsform der Erfindung sind darüber hinaus eines oder soweit technisch möglich mehrere der folgenden Merkmale verwirklicht:
- die Speicherkapazität wird durch den Generator aufgeladen, wenn die Leerlaufleistung des Generators um einen vorgegebenen Betrag kleiner als die Verbraucherleistung ist;
- die Speicherkapazität wird durch den Generator bei Schubabschaltung aufgeladen;
- sowohl die Speicherkapazität als auch die Batterie werden durch den Generator aufgeladen, wenn die Leistung, die von dem Generator zur Speicherkapazität maximal übertragen werden kann, geringer ist als die Differenz zwischen der momentanen Leistung des Generators und der Verbraucherleistung;
- Nachlaufverbraucher und Ruhestromverbraucher werden nach dem Motorstop durch die Speicherkapazität versorgt;
- die Batterie wird durch die Speicherkapazität nach dem Motorstop aufgeladen;
- die Batterie wird durch die Speicherkapazität aufgeladen, wenn ihr Ladezustand unter einen Schwellenwert sinkt und überschüssige Ladung in der Speicherkapazität vorhanden ist;
- das Verfahren wird in vorgegebenen Zeitintervallen automatisch neu gestartet.

Die erfindungsgemäße Lösung hat u.a. die folgenden Vorteile. Die Ladebilanz wird verbessert bei gleichzeitiger Erhöhung der Batterielebensdauer, da von der Batterie weniger Lade-/Entladezyklen durchlaufen werden müssen. Die Batteriegröße und Generatorgröße lassen sich ggfs. in Abhängigkeit der Unterdeckungshäufigkeit, der Verbraucher und der Größe von Speicherkapazität und DC/DC-Wandler verringern.

Die Erfindung wird im folgenden anhand der beigefügten Zeichnung erläutert, in der bevorzugte Ausführungsbeispiele der Erfindung gezeigt sind.

Fig. 1 zeigt schematisch den Aufbau eines Bordnetzes für ein Kraftfahrzeug nach dem Stand der Technik.

Fig. 2 zeigt ein Flussdiagramm einer ersten Ausführungsform des erfindungsgemäßen Verfahrens.

Fig. 3 zeigt ein Flussdiagramm einer weiteren Ausführungsform des erfindungsgemäßen Verfahrens.

In der folgenden Beschreibung ist unter Lastbetrieb zu verstehen, dass der Motor befeuert ist und der Antriebsstrang geschlossen ist. Unter Schubabschaltung ist zu verstehen, dass der Motor unbefeuert ist und der Antriebsstrang geschlossen ist.

Unter Leerlauf ist zu verstehen, dass der Motor befeuert ist und der Antriebsstrang unterbrochen ist.

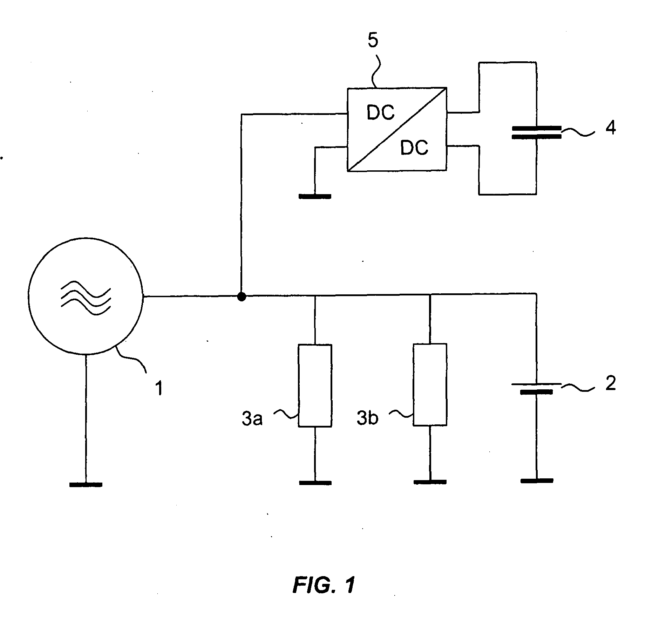

Fig. 1 zeigt schematisch den Aufbau eines Bordnetzes für ein Kraftfahrzeug nach dem Stand der Technik. Das Bordnetz umfasst einen Generator 1 und eine Batterie 2 zum Versorgen der Verbraucher, die an dem Bordnetz angeschlossen sind. In Fig. 1 sind symbolisch zwei Verbraucher 3a und 3b dargestellt. Dies können beispielsweise der Anlasser und die Klimaanlage sein. Beim Starten des Fahrzeugs muss der Anlasser 3a mit Strom versorgt werden, um den Verbrennungsmotor zu starten. Die elektrische Leistung dafür wird von der Batterie 2 bereitgestellt. Ist gleichzeitig beispielsweise auch eine Klimaanlage 3b eingeschaltet, so kann es beim Starten des Fahrzeugs zu einer Überlastung des Generators 1 und damit zu einer Belastung bzw. Überlastung der Batterie 2 kommen. Um kurzfristige Belastungen abzufangen, ist daher im Stand der Technik zusätzlich eine Speicherkapazität 4 vorgesehen, die bei Bedarf elektrische Leistung kurzfristig bereitstellen kann, sollte der Generator 1 - evtl. zusammen mit der Batterie 2 - diesen Bedarf nicht decken können.

Beim Stand der Technik übernimmt der Generator 1 im Lastbetrieb die Versorgung der Verbraucher 3a und 3b am Bordnetz. Wenn der Generator 1 darüber hinaus noch überschüssige elektrische Leistung erzeugt, was insbesondere bei längerem Lastbetrieb der Fall ist, so wird damit zunächst die Batterie 2 aufgeladen.

Die Speicherkapazität 4, die für die Abdeckung kurzfristigen Bedarfs dient, wird im Stand der Technik bei Schubabschaltung (ungefeuerter Schiebebetrieb) des Verbrennungsmotors aufgeladen. Bei Schubabschaltung wird der Verbrennungsmotor und damit der Generator 1 durch die Trägheit des Fahrzeugs angetrieben. Da dem Verbrennungsmotor kein Kraftstoff-Luft-Gemisch in dieser Phase zugeführt wird, wird das Fahrzeug durch den Verbrennungsmotor abgebremst. Dadurch, dass dem Generator 1 in dieser Phase außerdem noch elektrische Leistung entzogen wird zur Aufladung der Speicherkapazität 4, wird dieser Bremseffekt noch verstärkt. Der Vorteil dieser Art der Aufladung der Speicherkapazität 4 liegt darin, dass zum Laden der Speicherkapazität 4 kein zusätzlicher Kraftstoff verbraucht werden muss.

Zur elektrischen Anpassung von Bordnetz und Speicherkapazität 4 ist ein DC/DC-Wandler 5 vor der Speicherkapazität 4 vorgesehen. Dieser ist in der Regel für eine Leistung ausgelegt, die einem zu erwartenden Bedarf an Ladung der Speicherkapazität 4 entspricht.

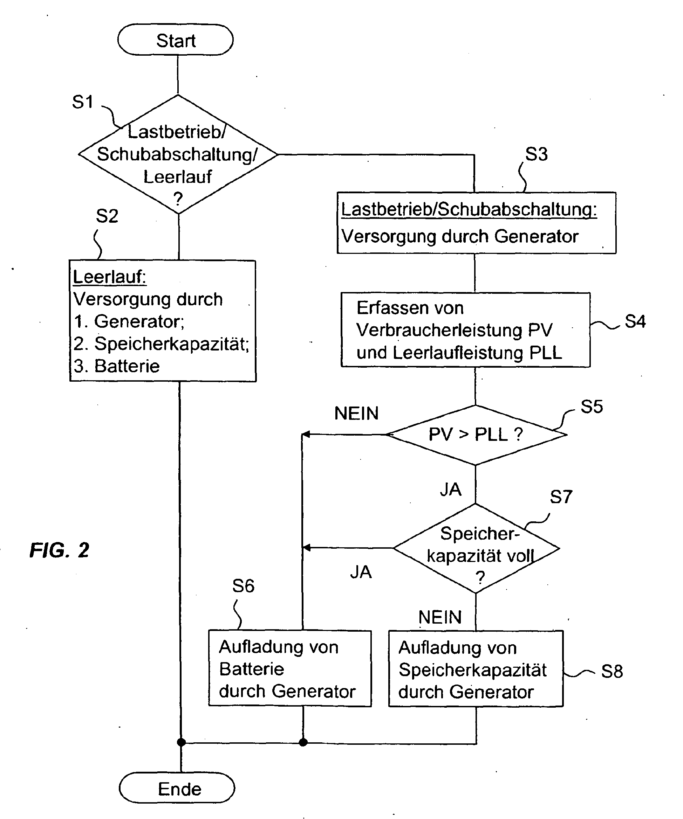

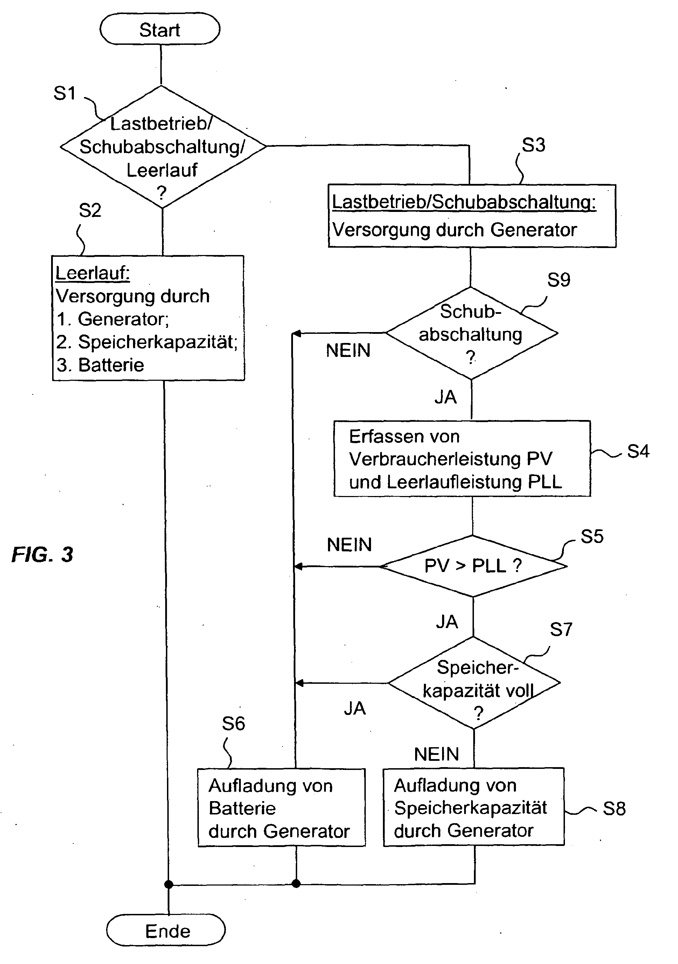

Während der Generator im Lastbetrieb mehr Energie liefern kann als das Bordnetz benötigt, kann es jedoch im Leerlauf oder leerlaufnahen Motordrehzahlbereich zu Unterdeckung des Bordnetz-Bedarfs kommen. Erfindungsgemäß wird dieser Zusammenhang von einer (nicht dargestellten) Steuerung erkannt, und es wird je nach Fahrzustand des Kraftfahrzeugs überschüssige Energie von dem Generator über einen DC/DC-Wandler an die Speicherkapazität geliefert, um sie bei Bedarf wieder zur Verfügung zu stellen. Wird der leerlaufnahe Bereich wieder angefahren und können die eingeschalteten Verbraucher dann voraussichtlich nicht durch den Generator 1 versorgt werden, wird das Bordnetz zusätzlich zum Generator 1 aus der Speicherkapazität 4 gespeist. Das entsprechende erfindungsgemäße Steuerungsverfahren wird im folgenden anhand von Fig. 2 und Fig. 3 erläutert.

In der Ausführungsform des erfindungsgemäßen Verfahrens für die Steuerung der Stromversorgung des Bordnetzes eines Kraftfahrzeugs nach Fig. 2 wird zu Beginn in Schritt S1 überprüft, in welcher Betriebsart sich das Fahrzeug befindet, also ob es sich im Lastbetrieb, in der Schubabschaltung oder im Leerlauf befindet.

Befindet sich das Fahrzeug gerade im Leerlauf, d.h. ist der Motor befeuert, aber der Antriebsstrang unterbrochen, so erfolgt die Versorgung der Verbraucher 3a, 3b in Schritt S2 derart, dass zunächst der Generator 1 belastet wird. Sollte dessen Leistung nicht mehr ausreichen, wird als nächstes die Speicherkapazität 4 belastet, um die Verbraucher mit der benötigten elektrischen Leistung zu versorgen. Erst wenn auch dies nicht mehr reicht, wird elektrische Leistung von der Batterie 2 bereitgestellt. Dadurch wird erreicht, dass die Batterie erst dann belastet wird, wenn es unumgänglich ist; die Batterie wird damit soweit es geht geschont.

Wird dagegen in Schritt S1 festgestellt, dass sich das Fahrzeug im Betriebszustand Lastbetrieb bzw. Schubabschaltung befindet, ist sichergestellt, dass der Generator 1 angetrieben wird, sei es im Lastbetrieb durch den Motor oder in der Schubabschaltung durch die Bewegung des Fahrzeugs aufgrund seiner trägen Masse. In diesen beiden Fällen kann die vom Generator 1 erzeugte elektrische Leistung auf die Verbraucher und Speicher (Batterie 2 und Speicherkapazität 4) aufgeteilt werden.

Um die optimale Verwendung der vom Generator 1 erzeugten überschüssigen Energie sicherzustellen, wird in Schritt S4 die momentane Verbraucherleistung PV und die Leerlaufleistung PLL des Generators ermittelt. Die momentane Verbraucherleistung PV hängt davon ab, welche Verbraucher in dem Augenblick dieser Erfassung über das Bordnetz mit elektrischer Leistung versorgt werden. Die Verbraucherleistung ist daher von Fall zu Fall unterschiedlich. Die Leerlaufleistung des Generators ist dagegen eine feste Größe, die beispielsweise vom Generatorhersteller in einem (nicht dargestellten) Speicher abgelegt wird, der in Schritt S4 ausgelesen wird. Die beiden Größen PV und PLL werden in Schritt S5 miteinander verglichen. Anhand des Vergleichsergebnisses kann vorhergesagt werden, ob der Generator in einem folgenden Leerlaufbetrieb das Bordnetz mit den Verbrauchern 3a, 3b ausreichend versorgen kann oder nicht.

Ist die Leistung des Generators ausreichend auch im Leerlauf, um alle derzeit angeschlossenen Verbraucher zu versorgen, wird die überschüssige Energie in Schritt S6 verwendet, um wie im Stand der Technik die Batterie 2 aufzuladen. Danach ist das erfindungsgemäße Verfahren vorerst beendet. Eine mögliche Fortsetzung des Verfahrens nach Schritt S6 wird weiter unten beschrieben.

Wenn in Schritt S5 dagegen festgestellt wird, dass die Generatorleistung im Leerlauf nicht ausreichend ist, so wird die überschüssige Energie des Generators im Lastbetrieb bzw. in der Schubabschaltung wie folgt genutzt. Beispielsweise wird im Lastbetrieb bei 5.000 Umdrehungen pro Minute momentan eine elektrische Leistung von 1,9 kW verbraucht. Der Generator ist bei 5.000 Umdrehungen pro Minute für 2,4 kW ausgelegt, so dass er diesen Bedarf ohne weiteres alleine decken kann. Im Leerlauf bei weniger als 900 Umdrehungen pro Minute liefert der Generator dagegen nur noch eine Leistung von 1,6 kW. Die Differenz von 300 W zwischen tatsächlichem (momentanen) Bedarf und Generatorleistung im Leerlauf wird erfindungsgemäß von der Speicherkapazität 4 bereitgestellt, um die Batterie zu schonen. Dazu muss die Speicherkapazität 4 über die entsprechende Ladung verfügen. Diese Ladung wird in der Speicherkapazität 4 mit der überschüssigen Energie des Generators erzeugt.

Wird in Schritt S5 also festgestellt, dass die Generatorleistung PLL im Leerlauf nicht ausreicht, um die Verbraucherleistung PV abzudecken, springt das Verfahren zu Schritt S7 und S8, um die Speicherkapazität 4 aufzuladen. Dabei wird in Schritt S7 geprüft, ob eine Aufladung der Speicherkapazität überhaupt nötig und möglich ist. Ist dies nicht der Fall, wird in Schritt S6 wiederum die Batterie aufgeladen, da die überschüssige Energie des Generators anders nicht genutzt werden kann. Wird in Schritt S7 aber festgestellt, dass die Speicherkapazität 4 nicht voll aufgeladen ist, wird in Schritt S8 die überschüssige Energie des Generators zur Speicherung der überschüssigen Energie von dem Generator eingesetzt.

Es versteht sich für den Fachmann von selbst, dass die Abfrage in Schritt S5 nicht auf einen reinen Größenvergleich beschränkt sein muss. Statt der reinen Zahlen PV und PLL können Wertebereiche festgelegt werden. Beispielsweise kann die Verbraucherleistung sicherheitshalber um einen vorgegebenen Betrag ΔP erhöht werden, um auch ein eventuelles Zuschalten eines weiteren Gerätes kurz nach der Erfassung der aktuellen Verbraucherleistung PV beim Übergang zu dem nächsten Leerlaufbetrieb abdecken zu können, d.h. die Speicherkapazität 4 wird auch dann schon durch den Generator 1 aufgeladen, wenn die Leerlaufleistung PLL des Generators noch um einen (kleinen) vorgegebenen Betrag ΔP größer als die Verbraucherleistung PV ist. Auf diese Art spricht die Abfrage S5 auch dann an, wenn noch kein unmittelbarer Bedarf besteht, dieser aber nicht unwahrscheinlich ist.

Mit diesen bisher beschriebenen Schritten des Verfahrens ist sichergestellt, dass die Speicherkapazität 4 für einen kurzfristigen Bedarf einspringen kann und die geforderte elektrische Energie zur Verfügung stellen kann.

Vorzugsweise weist der Schritt S8 folgende - in den Figuren nicht explizit dargestellte - Modifizierungen auf. Möglicherweise ist die Leistung, die vom Generator 1 zur Speicherkapazität 4 übertragen werden kann, begrenzt. Beispielsweise ist dies dann der Fall, wenn die maximal zulässige Leistung des DC/DC-Wandlers 5 überschritten wird. Wenn dementsprechend die Leistung, die von dem Generator 1 für die Aufladung der Speicherkapazität 4 zur Verfügung steht, diesen Grenzwert überschreitet, wird nur ein Teil der überschüssigen Leistung des Generators zur Aufladung der Speicherkapazität 4 genutzt, und der andere Teil der Leistung des Generators wird zur Aufladung der Batterie 2 genutzt. Die Aufladung der Speicherkapazität 4 wird in diesem Fall somit zeitlich gestreckt.

Andererseits kann das Aufladen im Verlauf von Schritt S8 nach relativ kurzer Zeit abgeschlossen sein. Dann muss über die Verwendung der Generatorleistung neu entschieden werden. Vorzugsweise wird daher der Schritt S8 nach einer vorgegebenen Zeitdauer unterbrochen, und das Verfahren springt wieder zu der Abfrage in Schritt S1 zurück, um die Verzweigungen in den Schritten S1, S5 und S7 erneut zu überprüfen. Dies gilt mutatis mutandis auch für das Aufladen der Batterie in Schritt S6. Mit anderen Worten, das Verfahren wird in vorgegebenen Zeitintervallen automatisch neu gestartet. Diese Rücksprungschleifen von S6 bzw. S8 zu S1 sind in Fig. 2 nicht explizit dargestellt.

Wesentliche Schritte des erfindungsgemäßen Verfahrens sind damit das Hinzuschalten der Speicherkapazität 4 im Leerlaufbetrieb, falls die Generatorleistung nicht ausreicht, sowie das Aufladen der Speicherkapazität 4 durch den Generator 1 bei Lastbetrieb/Schubabschaltung, wenn überschüssige Leistung zur Verfügung steht. Mit diesem Steuerungsverfahren wird dem Fall Rechnung getragen, dass es beim Kaltstart, insbesondere im Winter, zu einer Unterversorgung des Bordnetzes im Leerlauf kommen kann, bei der die Generatorauslastung 100% beträgt und darüber hinaus Verbraucher zugeschaltet sind, die nicht mehr versorgt werden können. Bei Erhöhung der Drehzahl (Anfahren) bleibt die Generatorauslastung bei 100%, die überschüssige Energie wird in der Speicherkapazität gespeichert. Bei einer folgenden Leerlaufphase wird die Speicherkapazität wieder entladen, damit die Batterie nicht zyklisch belastet werden muss. Sobald jedoch ein vorgegebener Generatorstrom überschritten wird, (der Stromwert ist dabei abhängig von der Außentemperatur, der Generatortemperatur, der Generatorgröße, der Verbrennungsmaschine, der Ausstattung des Fahrzeugs, dem Übersetzungsverhältnis, der Leerlaufdrehzahl, der Möglichkeit der Anhebung der Drehzahl), wird die oben beschriebene Steuerung nach Fig. 2 aktiviert. Damit lässt sich die Lebensdauer der Batterie erhöhen und die Bordnetzversorgung praktisch immer sicherstellen. Es entfällt so die Notwendigkeit, Verbraucher zwangsweise abzuschalten, und die Wahrscheinlichkeit für eine Zwangsabschaltung wird deutlich eingeschränkt. Ferner können die Größe der Batterie und des Generators kleiner ausgelegt werden.

Die Aufladung der Batterie 2 muss nicht ausschließlich durch den Generator 1 erfolgen, die Batterie 2 kann auch durch die Speicherkapazität 4 aufgeladen werden, wenn ihr Ladezustand unter einen Schwellenwert sinkt und überschüssige Ladung in der Speicherkapazität 4 vorhanden ist.

Da die Speicherkapazität 4 die Ladung nicht so lange halten kann wie die Batterie, wird die Ladung in der Speicherkapazität 4 nach dem Motorstop vorzugsweise in die Batterie 2 umgelagert, so dass die Batterie 2 nach dem Motorstop durch die Speicherkapazität 4 aufgeladen wird.

Bei einer alternativen bevorzugten Ausführungsform des Verfahrens werden Nachlaufverbraucher und Ruhestromverbraucher durch die Speicherkapazität 4 nach dem Motorstop versorgt. Bei Nachlaufverbrauchern handelt es sich beispielsweise um die elektrische Wasserpumpe, die das Kühlwasser auch nach dem Motorstop noch eine gewisse Zeit umwälzt, um einen Wärmestau zu vermeiden. Auch das Motorsteuergerät arbeitet nach Motorstop für eine gewisse Zeit weiter, ebenso wie das Türsteuergerät für die Zentralverriegelung etc. Ruhestromverbraucher sind Steuergeräte, die sich nach dem Motorstop und dem Abstellen des Fahrzeugs im Sleep-mode befinden.

Es versteht sich für den Fachmann von selbst, dass der oben beschrieben Ablauf des Verfahrens an jeder beliebigen Stelle unterbrochen wird, wenn von der Motorsteuerung erkannt wird, dass ein Wechsel der Betriebsart erfolgt, d.h. ein Übergang von Lastbetrieb auf Leerlauf oder Schubabschaltung und ähnliches. Wie oben bereits gesagt wird das Verfahren jedoch generell automatisch neu gestartet, sobald es den Befehl "Ende" erreicht hat, d.h. es wird in vorgegebenen Zeitintervallen immer wieder neu gestartet.

Mit dem erfindungsgemäßen Verfahren lässt sich damit die Anzahl der Lade-/Entladungszyklen der Batterie gegenüber dem Stand der Technik weiter verringern.

Die Erfindung ist nicht beschränkt auf die oben beschriebenen Ausführungsbeispiele. So ist in Fig. 3 eine weitere Ausführungsform des erfindungsgemäßen Verfahrens gezeigt. Das Verfahren nach Fig. 3 unterscheidet sich von demjenigen in Fig. 2 dadurch, dass vor dem Erfassen der momentan benötigten Verbraucherleistung PV und der nominellen Leerlaufleistung PLL des Generators 1 in Schritt S4 geprüft wird, ob sich das Fahrzeug im Lastbetrieb oder in der Schubabschaltung befindet. Im übrigen ist die Ausführungsform des Verfahrens nach Fig. 3 gleich der in Fig. 2, und Schritte, die bei beiden Ausführungsformen identisch sind, werden im folgenden nicht nochmals erläutert. Bei der bevorzugten Ausführungsform des Verfahrens nach Fig. 3 wird die Speicherkapazität 4 nur dann aufgeladen, wenn damit kein Kraftstoffverbrauch verbunden ist, d.h. wenn der Generator durch die Trägheit des Fahrzeugs angetrieben wird. Das ist der Fall im unbefeuerten Betrieb, also während der Schubabschaltung. Die dafür erforderliche Abfrage nach der Befeuerung des Motors erfolgt bei dieser Ausführungsform bereits vor dem Erfassen der Verbraucherleistung PV und der Leerlaufleistung PLL in Schritt S4. Wird in der Abfrage in Schritt S9 festgestellt, dass sich das Fahrzeug nicht in der Schubabschaltung befindet, d.h. dass es im Lastbetrieb gefahren wird, bedeutet dies, dass Kraftstoff zum Vortrieb des Fahrzeugs aufgewendet werden muss. Eine Belastung des Generators, um weitere Verbraucher zu versorgen, hier die Speicherkapazität 4, würde eine größere Last für den Verbrennungsmotor darstellen und damit zu einem erhöhten Kraftstoffverbrauch führen. Daher wird in diesem Fall das erfindungsgemäße Verfahren abgekürzt und die schon zur Verfügung stehende überschüssig elektrische Leistung ausschließlich zum Aufladen der Batterie verwendet. Im Diagramm in Fig. 3 bedeutet dies, dass von Schritt S9 der Sprung zu Schritt S6, Aufladen der Batterie durch den Generator 1, erfolgt.

Wird dagegen in der Abfrage in Schritt S9 festgestellt, dass sich das Fahrzeug in der Schubabschaltung befindet, bedeutet dies, dass das Fahrzeug allein aufgrund seiner Trägheit in Bewegung ist. Der Fahrer will keinen weiteren Geschwindigkeitszuwachs, eventuell ist sogar eine Abbremsung des Fahrzeugs durch den Motor gewünscht. Die "restliche" kinetische Energie des Fahrzeugs wird in diesem Fall genutzt, um mit ihr den Generator 1 anzutreiben und mit der gewonnenen elektrischen Energie die Speicherkapazität 4 aufzuladen. Auf diese Art wird bei der Ausführungsform des erfindungsgemäßen Verfahrens nach Fig. 3 die Bewegungsenergie des Fahrzeugs optimal genutzt und Kraftstoff eingespart.

### Bezugszeichen

- 1: Generator
- 2: Batterie
- 3: Verbraucher, 3a erster Verbraucher, 3b zweiter Verbraucher
- 4: Speicherkapazität
- 5: DC/DC-Wandler
- S1: Abfrage: Lastbetrieb/Schubabschaltung/Leerlauf?
- S2: Leerlauf: Versorgung durch 1. Generator; 2. Speicherkapazität; 3. Batterie
- S3: Lastbetrieb/Schubabschaltung: Versorgung durch Generator
- S4: Erfassen von Verbraucherleistung PV und Leerlaufleistung PLL
- S5: Abfrage: PV > PLL?
- S6: Aufladung von Batterie durch Generator
- S7: Abfrage: Speicherkapazität voll?
- S8: Aufladung von Speicherkapazität durch Generator
- S9: Abfrage: Schubabschaltung?

## Patentansprüche

1. Verfahren zum Steuern eines Bordnetzes eines Kraftfahrzeugs mit einem Generator (1), einer Batterie (2) zum Versorgen des Bordnetzes, wenigstens einem Verbraucher (3a, 3b) und einer Speicherkapazität (4) zum kurzfristigen Bereitstellen elektrischer Leistung bei Bedarf, wobei die Batterie aufgeladen wird, wenn der Generator überschüssige elektrische Leistung erzeugt, das die Schritte aufweist:
Versorgen des wenigstens einen Verbrauchers (3a, 3b) und Aufladen der Batterie (2) sowie der Speicherkapazität (4) durch den Generator (1) im Lastbetrieb oder bei Schubabschaltung,
wobei der wenigstens eine Verbraucher (3a, 3b) zusätzlich durch die Batterie (2) und/oder die Speicherkapazität (4) versorgt wird, wenn die momentane Generatorleistung nicht ausreicht,
**gekennzeichnet durch** die Schritte
Erfassen (S4) einer momentan benötigten elektrischen Verbraucherleistung (PV) im Lastbetrieb oder bei Schubabschaltung,
Vergleichen (S5) der Verbraucherleistung (PV) mit einer Leerlaufleistung (PLL) des Generators (1) und
Aufladen (S8) der Speicherkapazität (4) **durch** den Generator (1), wenn die Leerlaufleistung (PLL) des Generators kleiner als die Verbraucherleistung (PV) im Lastbetrieb oder bei Schubabschaltung ist.

2. Verfahren nach Anspruch 1, **dadurch gekennzeichnet, dass** die Speicherkapazität (4) durch den Generator (1) aufgeladen wird, wenn die Leerlaufleistung (PLL) des Generators um einen vorgegebenen Betrag kleiner als die Verbraucherleistung (PV) ist.

3. Verfahren nach einem der vorhergehenden Ansprüche, **dadurch gekennzeichnet, dass** die Speicherkapazität (4) durch den Generator (1) bei Schubabschaltung aufgeladen wird.

4. Verfahren nach einem der vorhergehenden Ansprüche, **dadurch gekennzeichnet, dass** sowohl die Speicherkapazität (4) als auch die Batterie (2) durch den Generator (1) aufgeladen werden, wenn die Leistung, die von dem Generator (1) zur Speicherkapazität. (4) maximal übertragen werden kann, geringer ist als die Differenz zwischen der momentanen Leistung des Generators (1) und der Verbraucherleistung (PV).

5. Verfahren nach einem der vorhergehenden Ansprüche, **dadurch gekennzeichnet, dass** Nachlaufverbraucher und Ruhestromverbraucher nach dem Motorstop durch die Speicherkapazität (4) versorgt werden.

6. Verfahren nach einem der Ansprüche 1 bis 4, **dadurch gekennzeichnet, dass** die Batterie (2) durch die Speicherkapazität (4) nach dem Motorstop aufgeladen wird.

7. Verfahren nach einem der vorhergehenden Ansprüche, **dadurch gekennzeichnet, dass** die Batterie (2) durch die Speicherkapazität (4) aufgeladen wird, wenn ihr Ladezustand unter einen Schwellenwert sinkt und überschüssige Ladung in der Speicherkapazität (4) vorhanden ist.

8. Verfahren nach einem der vorhergehenden Ansprüche, **dadurch gekennzeichnet, dass** es in vorgegebenen Zeitintervallen automatisch neu gestartet wird.

## Claims

1. A method for controlling an electrical system of a motor vehicle with a generator (1), a battery (2) for supplying the electrical system, at least one load (3a, 3b) and a storage capacitor (4) for the brief supply of electrical power on demand, wherein the battery is charged when the generator produces excess electrical power, having the steps:
supplying the at least one load (3a, 3b) and charging the battery (2) and the storage capacitor (4) by the generator (1) in load operation or fuel cut-off, wherein the at least one load (3a, 3b) is additionally supplied by the battery (2) and/or the storage capacitor (4), if the instantaneous generator power is not sufficient, **characterised by** the steps of detecting (S4) an instantaneously required electrical load power (PV) in load operation or fuel cut-off, comparing (S5) the load power (PV) with an idle power (PLL) of the generator (1) and charging (S8) the storage capacitor (4) by the generator (1), when the idle power (PLL) of the generator is less than the load power (PV) in load operation or fuel cut-off.

2. A method according to claim 1, **characterised in that** the storage capacitor (4) is charged by the generator (1) when the idle power (PLL) of the generator is less by a predetermined amount than the load power (PV).

3. A method according to any one of the preceding claims, **characterised in that** the storage capacitor (4) is charged by the generator (1) at fuel cut-off.

4. A method according to any one of the preceding claims, **characterised in that** both the storage capacitor (4) and the battery (2) are charged by the generator (1) when the maximum power that can be transferred from the generator (1) to the storage capacitor (4) is less than the difference between the instantaneous power of the generator (1) and the load power (PV).

5. A method according to any one of the preceding claims, **characterised in that** follow-up loads and standby loads are supplied by the storage capacitor (4) after the engine is stopped.

6. A method according to any one of claims 1 to 4, **characterised in that** the battery (2) is charged by the storage capacitor (4) after the engine is stopped.

7. A method according to any one of the preceding claims, **characterised in that** the battery (2) is charged by the storage capacitor (4) if its charge state drops below a threshold value and excess charge is present in the storage capacitor (4).

8. A method according to any one of the preceding claims, **characterised in that** the method is automatically restarted at predetermined time intervals.

## Revendications

1. Procédé de commande du réseau embarqué d'un véhicule automobile comportant un générateur (1), une batterie (2) alimentant le réseau embarqué, au moins un utilisateur (3a, 3b) et un condensateur de stockage (4) pour fournir à court terme une puissance électrique demandée, la batterie se chargeant lorsque le générateur fournit une puissance électrique en excédent,
procédé comprenant les étapes suivantes :
- l'alimentation d'au moins un utilisateur (3a, 3b) et recharge de la batterie (2) ainsi que du condensateur de stockage (4) par le générateur (1) en mode de fonctionnement en charge ou en mode de coupure de poussée,
- au moins un utilisateur (3a, 3b) étant alimenté en plus par la batterie (2) et/ou par le condensateur de stockage (4) lorsque la puissance instantanée du générateur n'est pas suffisante,
procédé **caractérisé par** les étapes suivantes :
- saisie (S4) de la puissance électrique instantanée demandée par les utilisateurs (PV) en mode de charge ou en mode de coupure de poussée,
- comparaison (S5) de la puissance demandée (PV) et d'une puissance de marche à vide (PLL) du générateur (1), et
- recharge (S8) du condensateur de stockage (4) par le générateur (1) si la puissance de marche à vide (PLL) du générateur est inférieure à la puissance demandée (PV) en mode de charge ou en mode de coupure de poussée.

2. Procédé selon la revendication 1,
**caractérisé en ce que**
le générateur (1) charge le condensateur de stockage (4) si la puissance de marche à vide (PLL) du générateur est inférieure d'au moins une amplitude prédéfinie à la puissance demandée (PV).

3. Procédé selon les revendications précédentes,
**caractérisé en ce que**
le générateur (1) charge le condensateur de stockage (4) en mode de coupure de poussée.

4. Procédé selon les revendications précédentes,
**caractérisé en ce qu'**
le générateur (1) charge à la fois le condensateur de stockage (4) et la batterie (2) si la puissance transmise au maximum par le générateur (1) vers le condensateur de stockage (4) est inférieure à la différence entre la puissance instantanée du générateur (1) et la puissance demandée (PV).

5. Procédé selon les revendications précédentes,
**caractérisé en ce que**
le condensateur de stockage (4) alimente les utilisateurs de fin de mouvement et les utilisateurs de courant de repos après l'arrêt du moteur.

6. Procédé selon les revendications 1 à 4,
**caractérisé en ce qu'**
après l'arrêt du moteur, le condensateur de stockage (4) charge la batterie (2).

7. Procédé selon les revendications précédentes,
**caractérisé en ce qu'**
le condensateur de stockage (4) charge la batterie (2) si son état de charge descend en dessous d'un seuil et si le condensateur de stockage (4) dispose d'une charge excédentaire.

8. Procédé selon les revendications précédentes,
**caractérisé en ce que**
dans les intervalles de temps prédéfini, on redémarre automatiquement.
